# FASCICULE DE BREVET EUROPEEN

(11) **EP 2 341 948 B1**
(45) Date de publication et mention de la délivrance du brevet: **13.04.2016**
(21) Numéro de dépôt: 09740173.1
(22) Date de dépôt: 14.09.2009
(51) Int. Cl.: A61L 9/20, B01D 53/85, B01D 53/86, B01J 19/12, B01J 21/18, B01J 27/20, B01J 35/00, B01J 35/04, C02F 1/32, F24F 3/16, B01J 27/224

(54) **PHOTOREACTEUR COMPORTANT UN PHOTOCATALYSEUR A BASE DE MOUSSES TRIDIMENSIONNELLES STRUCTUREES EN CARBURE DE SILICIUM**
PHOTOREAKTOR ENTHALTEND EINEN PHOTOKATALYSATOR BESTEHEND AUS DREIDIMENSIONAL STRUKTURIERTEN SILIZIUMKARBIDSCHÄUMEN
PHOTOREACTOR COMPRISING A PHOTOCATALYST BASED ON THREE-DIMENSIONAL STRUCTURED SILICON CARBIDE FOAMS

(30) Priorité: 12.09.2008 FR 0805021
(43) Date de publication de la demande: 13.07.2011
(73) Titulaire: Centre National de la Recherche Scientifique, 75794 Paris Cedex 16 (FR); Université de Strasbourg, 67081 Strasbourg Cedex (FR)
(72) Inventeur: PAHM-HUU, Cuong, F-67700 Saverne (FR); KELLER, Nicolas, F-67200 Strasbourg (FR); LEDOUX, Marc-Jacques, F-67000 Strasbourg (FR); KELLER-SPITZER, Valérie, F-67203 Oberschaeffolsheim (FR); BEGIN, Dominique, F-67204 Achenheim (FR); GRANDCOLAS, Mathieu, F-67000 Strasbourg (FR); JANOWSKA, Izabela, F-67100 Strasbourg (FR); HAJESMAILI, Shabnam, F-67000 Strasbourg (FR)
(74) Mandataire: Schmidt, Martin Peter
(86) Numéro de dépôt international: PCT/FR2009/001093
(87) Numéro de publication internationale: WO 2010/029235

(56) Documents cités:
- EP-A1- 1 656 985
- WO-A2-2009/098393
- FR-A1- 2 925 356
- JP-A- H11 335 187
- JP-A- 2003 053 194
- JP-A- 2004 148 305
- JP-A- 2004 351 381
- JP-A- 2007 098 197
- JP-A- 2007 160 273
- US-A1- 2003 050 196
- ANONYMOUS: 'ASTM D3576 Standard test method for cell size of rigid cellular plastics' ASTM INTERNATIONAL STANDARD, ASTM INTERNATIONAL, US vol. D-3576, 01 Janvier 1977, pages 908 - 911, XP009095864
- HUU T T ET AL: "Towards a more realistic modeling of solid foam: Use of the pentagonal dodecahedron geometry", CHEMICAL ENGINEERING SCIENCE, OXFORD, GB, vol. 64, no. 24, 16 December 2009 (2009-12-16), pages 5131-5142, XP026704417, ISSN: 0009-2509, DOI: 10.1016/J.CES.2009.08.028 [retrieved on 2009-09-01]
- LACROIX ET AL: "Pressure drop measurements and modeling on SiC foams", CHEMICAL ENGINEERING SCIENCE, OXFORD, GB, vol. 62, no. 12, 14 May 2007 (2007-05-14), pages 3259-3267, XP022078386, ISSN: 0009-2509, DOI: 10.1016/J.CES.2007.03.027

## Description

### Domaine technique de l'invention

L'invention concerne un photoréacteur comportant des photocatalyseurs à base de mousses tridimensionnelles structurées, notamment à base de mousses alvéolaires de β-SiC, , ainsi que des procédés de son utilisation pour catalyser des réactions chimiques ou la destruction de microbes, notamment dans le but de décontaminer des effluents liquides ou gazeux.

### Etat de la technique

La photocatalyse permet des réactions chimiques intéressantes, stimulées par la lumière en présence d'un photocatalyseur. Un des problèmes que pose cette approche est la conception du réacteur, qui doit permettre une grande surface d'échange entre le milieu réactionnel et le catalyseur, une faible perte de charge dans le cas des réacteurs continus, et une forte transmission de lumière. Un problème est de disposer d'une grande surface d'échange illuminée entre le photocatalyseur et le milieu réactionnel.

Quand on utilise des substrats à base de papier ou de matière non tissée par exemple, on ne peut pas travailler en flux traversant avec des épaisseurs importantes de substrat, car la perte de charge serait trop importante. Pour avoir un contact suffisant entre le milieu réactionnel et la phase photocatalytiquement active, soit on utilise des surfaces de papier importantes pour obtenir un effet catalytique suffisant (voir le brevet US 6,906,001 (Ahlstrom Research and Services) qui propose d'appliquer le photocatalyseur sur les panneaux de faux plafonds de pièces d'habitation), soit, et notamment pour des applications en génie chimique, on doit travailler en flux léchant.

On a donc recherché des substrats poreux ou structurés pour augmenter leur surface. A titre d'exemple, la demande de brevet WO 03/037509 (SICAT, CNRS et Université Louis Pasteur) décrit un procédé de purification d'effluents gazeux à l'aide d'un photocatalyseur poreux comprenant du SiC, du TiO₂ et du WO₃.

La demande de brevet WO 2006/061518 (CNRS et Université Louis Pasteur) décrit un procédé d'inactivation d'agents biologiques dispersés en milieu gazeux par un semi-conducteur photo-activé à base de TiO₂ déposé sur la surface interne d'un réacteur ; ce réacteur présente à l'intérieur des saillies afin d'augmenter sa surface interne.

L'article « Influence of the geometry of a monolithic support on the efficiency of photocatalyst for air cleaning » par M. Furman et al. (Chemical Engineering Science vol. 62, p. 5312-5316 (2007)) présente une étude-modèle d'un réacteur photocatalytique à support poreux. Le support en résine époxy a été préparé par stéréolithographie, et du TiO₂ a été déposé comme photocatalyseur.
Les documents JP 2007 160273 A (Toshiba Ceramis), JP 2003 053194 A (Seiwa Kogyo KK et al.) et JP 2007 098197 A (Bridgestone Corp.) décrivent le dépôt de photocatalyseurs sur des céramiques poreuses frittées. Le document JP 2004 148305 A (Osaka Gas Co Ltd) décrit le dépôt d'un photocatalyseur sur des nanotubes ou nanofibres de carbone déposés sur des céramiques poreuses frittées, mais ne mentionne pas le SiC.

On connait l'utilisation de photocatalyseurs se présentant sous la forme d'une mousse, ou déposés sur un support se présentant sous la forme d'une mousse. On a utilisé notamment des photocatalyseurs à base d'une mousse de TiO₂, ou des photocatalyseurs de TiO₂ déposé sur un support sous forme de mousse, notamment le nickel et l'alumine. Les articles « Préparation of titania foams having an open cellular structure and their application to photocatalysis » par A. Yamamoto et H. Imai (Journal of Catalysis, vol. 226, p. 462-465 (2004)) et « The design and photoreaction kinetic modeling of a gas-phase titania foam packed bed reactor » par A.O. Ibhadon (Chemical Engineering Journal vol. 133, p. 317-323 (2007)) décrivent la préparation d'une mousse de TiO₂ et son utilisation photocatalytique pour la dégradation de l'acétaldéhyde et du benzène ou toluène, respectivement.
L'article « Design considérations of photocatalytic oxidation reactors using TiO2-coating foam nickels for degrading indoor gaseous formaldehyde" par L. Yang et al. (Catalysis Today vol. 126, p. 359-368 (2007)) décrit un réacteur comportant une couche mince de TiO₂, d'une épaisseur optimale de 80 nm (pour une longueur d'onde excitatrice de 254 nm), déposée sur une mousse de nickel ; l'épaisseur de la mousse de nickel est limitée à environ 2 mm, à cause de son absorption optique.

L'article « Three-phase photocatalysis using suspended titania and titania supported on a reticulated foam monolith for water purification » par I.J. Ochuma et al. (Catalysis Today, vol. 128, p. 100-107 (2007)) décrit l'utilisation d'un photocayalyseur à base de TiO₂, déposé par vaporisation d'une suspension de TiO₂ sur une mousse d'alumine, pour la dégradation du DBU (1,8-diazabicyclo[5,4,0]undec-7-ene contenu dans un effluent aqueux.
L'article « Potential of Silver Nanoparticle-Coated Polyurethane Foam as an Antibacterial Water Filter » par Prashant Jain et T. Pradeep, paru le 5 avril 2005 dans le revue Biotechnology and Bioengineering, vol. 90 (1), p. 59 - 62, décrit la fixation de nanoparticules d'argent sur un support de mousse de polyuréthane.

On connait également les mousses de β-SiC, qui peuvent servir comme support de catalyseur. La demande de brevet WO 2007/000506 (TOTAL S.A.) décrit un procédé de transformation de monoxyde de carbone et d'hydrogène en hydrocarbures selon la réaction de Fischer-Tropsch, dans lequel une mousse alvéolaire de β-SiC est utilisée comme support de catalyseur.

On connaît également les mousses métalliques, qui peuvent être utilisées comme support de catalyseur, mais qui, outre leur prix et poids élevés, peuvent poser des problèmes de corrosion.

Le problème que la présente invention cherche à résoudre est de présenter un nouveau photoréacteur comportant un photocatalyseur pour catalyse hétérogène, à faible perte de charge et grande surface spécifique, et présentant une bonne inertie chimique.

### Objets de l'invention

Selon l'invention, le problème est résolu par un photoreateur comportant un photocatalyseur comportant une mousse alvéolaire en carbure et notamment en β-SiC, et une phase photocatalytiquement active, déposée directement sur ladite mousse alvéolaire ou sur une phase intermédiaire déposée sur ladite mousse alvéolaire. La taille moyenne des alvéoles est comprise entre 3000 µm et 5000 µm. Le photocatalyseur présente avantageusement une surface spécifique d'au moins 5 m²/g, et une densité comprise entre 0,1 g/cm³ et 0,4 g/cm³. Il peut présenter dans le spectre visible entre 400 nm et 700 nm une transmission optique globale d'au moins 10% pour une mousse d'une épaisseur de 1,5 cm, et préférentiellement d'au moins 15%. Ladite mousse peut comporter des nanotubes ou nanofibres, qui constituent, ou qui supportent en tant que phase intermédiaire, la phase photocatalytiquement active. Lesdits nanotubes ou nanofibres sont préférentiellement sélectionés parmi le carbone, le SiC, le TiO₂, les titanates. Le diamètre extérieur de ces nanotubes ou nanofibres peut être compris entre 10 et 1000 nm, préférentiellement entre 10 et 160 nm, et encore plus préférentiellement entre 10 et 80 nm.
La phase photocatalytiquement active doit être un semiconducteur, et peut être un chalcogénure (tel qu'un oxyde, sulfure, séléniure). Plus particulièrement, elle peut être sélectionnée dans le groupe constitué par : les oxydes métalliques tels que WO₃, ZnO, TiO₂ et SnO₂ ; les titanates, les sulfures ou séléniures métalliques, éventuellement dopés, tels que CdS, CdSe, ZnS, ZnSe et WS₂; les semi-conducteurs de type III-V, éventuellement dopés, tels que GaAs et GaP. Le semi-conducteur peut être dopé, modifié en surface ou dans le volume, ou couplé avec d'autres matériaux qui sont avantageusement des semi-conducteurs.

Un procédé pour la fabrication d'un tel photocatalyseur à base de mousse alvéolaire en carbure et notamment en β-SiC comprend les étapes suivantes :
(a) on approvisionne une préforme en mousse alvéolaire polymère carbonisable avec une taille moyenne d'alvéoles comprise entre 2500 µm et 5000 µm ;
(b) on imprègne ladite préforme d'une résine polymère carbonisable, contenant de la poudre de silicium si une mousse en β-SiC est souhaitée, ou un autre métal ou métalloïde ;
(c) on polymérise ladite résine polymère ;
(d) on transforme ladite préforme et ladite résine polymérisée en carbone ;
(e) on effectue un traitement thermique à une température comprise entre 1200°C et 1450°C pour former le carbure ;
(f) on dépose une phase photocatalytiquement active, de préférence sélectionnée parmi les semi-conducteurs dans le groupe constitué par :
   - les oxydes métalliques tels que WO₃, ZnO, TiO₂ et SnO₂,
   - les titanates,
   - les sulfures ou séléniures métalliques, tels que CdS, CdSe, ZnS, ZnSe et WS₂,
   - les semiconducteurs de type III-V, tels que GaAs et GaP,

ces phases photocatalytiquement actives étant éventuellement dopées ou greffées d'éléments de transfert de charge (tels que de chromophores et/ou de nanoparticules (« quantum dots »)), et/ou d'un second matériau semi-conducteur absorbant dans le spectre visible ou ultra-violet (UV) et capables de transférer la charge sur le premier semi-conducteur ou inversement.
Entre les étapes (e) et (f), on peut déposer des nanotubes ou nanofibres, de préférence en carbone, SiC, TiO₂, ou titanate, le dépôt desdits nanofibres ou nanotubes en SiC ou TiO₂ pouvant éventuellement remplacer le dépôt du photocatalyseur en étape (f). Ces nanotubes ou nanofibres peuvent aussi être synthétisés directement sur la mousse alvéolaire.

La phase photocatalytiquement active peut être déposée par exemple par l'une des techniques suivantes :
- à partir d'une suspension de particules cristallisées, appliquée de préférence par trempage et imprégnation, par voie aérosol ou par goutelettes,
- par synthèse sol-gel,
- par dépôt à partir d'une phase vapeur,
- par le dépôt de couches successives de polyélectrolytes,
- par la technique Langmuir-Blodgett.

Le photoréacteur selon l'invention comprend au moins un photocatalyseur tel que décrit ci-dessus. Il comprend un élément d'enveloppe étanche aux liquides et aux gaz, au moins une pièce d'un photocatalyseur selon l'invention située à l'intérieur dudit élément d'enveloppe, et au moins une source d'un rayonnement lumineux. Ladite au moins une pièce de photocatalyseur a une forme annulaire.
Ledit photoréacteur est caractérisé en ce que :
(a) il comprend une pluralité de N pièces annulaires d'un photocatalyseur ,
(b) ledit rayonnement lumineux est introduit dans le diamètre intérieur desdites pièces annulaires,
(c) lesdites pièces annulaires présentent un diamètre intérieur alternativement différent, de manière à ce que toutes les pièces de numéro d'ordre pair présentent le même diamètre intérieur d₁, et toutes les pièces de numéro d'ordre impair présentent le même diamètre intérieur d₂.

Lesdites pièces annulaires peuvent être séparées d'un espace vide ou d'une pièce optiquement transparente à au moins une partie dudit rayonnement lumineux utilisé.

Un autre objet de l'invention est l'utilisation d'un photoréacteur selon l'invention pour catalyser des réactions chimiques en phase liquide.

Un dernier objet de l'invention est l'utilisation d'un photoréacteur selon l'invention pour l'inactivation ou dégradation d'agents biologiques.

### Figures

Les figures 1 à 3 illustrent des modes de réalisation d'un réacteur cylindrique selon l'invention. Dans ce réacteur, le support de catalyseur est assemblé à partir d'anneaux cylindriques de mousse alvéolaire selon l'invention.
La figure 1 montre de manière schématique l'intérieur d'un réacteur tubulaire comportant une mousse de carbure assemblée à partir d'anneaux cylindriques identiques (a) ou.de forme alternativement différente (b).
La figure 2 montre les cotes des anneaux cylindriques de ces réacteurs, ainsi qu'un profil de vitesse de particules.
La figure 3 montre un exemple d'un réacteur présentant une configuration structurée en alternance avec 8 éléments de mousse équidistants.

### Description

D'une manière générale, dans le présent document, le terme « surface spécifique » fait référence à la surface spécifique dite BET, mesurée à l'aide de la méthode de Brunauer, Emmet et Teller, bien connue de l'homme du métier, et décrit notamment dans la norme NF X 11-621.
La « porosité » d'un matériau est habituellement définie par référence à trois catégories de pores qui se distinguent par leur taille : la microporosité (diamètre inférieur à environ 2 nm), la mésoporosité (diamètre compris entre environ 2 et environ 50 nm) et la macroporosité (diamètre supérieur à environ 50 nm).
Le terme « mousse alvéolaire » désigne une mousse à porosité ouverte qui présente à la fois une très faible densité et un grand volume poreux. La taille de l'ouverture des alvéoles est variable et se situe typiquement entre environ 800 et 6000 µm. Une telle mousse présente une très faible microporosité. La mésoporosité est liée essentiellement aux ponts qui forment les alvéoles. La macroporosité ouverte d'une telle mousse peut varier de 30 à 95%, notamment de 50 à 90%, et sa densité volumique peut être comprise entre 0,05 g/cm³ et 0,5 g/cm³.
Selon l'acception générale du terme mousse (« foam » en anglais), celle-ci n'est pas forcément alvéolaire. Dans ce sens plus général du terme « mousse », elle peut aussi simplement comporter des bulles (à l'instar des mousses métalliques ou des mousses de ciment obtenues par l'ajout de poudres d'aluminium qui, en réagissant avec le ciment liquide, forment des bulles de gaz). Une telle mousse n'est pas alvéolaire.
D'une manière générale, les mousses alvéolaires poreusessont décrites par quatre grandeurs caractéristiques principales : la taille des fenêtres (Phi), la taille des alvéoles (a), la taille des ponts (ds) et la porosité (epsillon); la porosité (epsilon) est égale à 1 - Vₛ / Vₘₒᵤₛₛₑ, où Vₘₒᵤₛₛₑ représente le volume occupé macroscopiquement par la mousse (ce volume étant défini par les cotes de la pièce de mousse, comme s'il s'agissait d'une pièce pleine), et Vₛ représente le volume de matière constituant la pièce de mousse.
Ces quatre paramètres sont souvent liés deux par deux : par exemple : phi/a = f(epsillon), ou ds/a=f(epsillon).

D'une manière générale, dans le présent document, on entend par « agent biologiques » des entités de nature biologique, généralement de faible taille, typiquement comprise entre 0,01 µm et 10 µm, et susceptibles de pouvoir être véhiculées par un courant gazeux ou liquide. Ainsi, les agents biologiques à inactiver selon le procédé selon l'invention peuvent notamment être des bactéries (telles que les bactéries du genre *Legionella,* par exemple *Legionella pneumophila*), des virus, des spores de champignons, des spores bactériennes ou un mélange de ces entités.
Par « agent biologique inactivé », on entend ici un agent biologique ayant perdu une activité biologique, et notamment ayant perdu sa capacité de réplication ou de reproduction, ou, dans le cas des virus, sa capacité d'infection ou de contamination. Ainsi, une bactérie inactivée n'est plus capable de développer une colonie après mise en culture dans un milieu adapté, et un virus inactivé n'est plus capable de se reproduire dans une cellule adaptée.

Le problème peut être résolu en utilisant des mousses alvéolaires en carbure, et notamment en β-SiC, qui présentent une transmittance suffisante à la lumière, une perte de charge très faible et une porosité élevée. Les mousses doivent présenter une taille moyenne d'alvéoles comprise entre 2500 µm et 5000 µm ; de manière surprenante, malgré la taille élevée des alvéoles, de telles mousses présentent une activité catalytique suffisante. Au-dessous de 2500 µm, la transmission optique des mousses devient trop faible pour des applications en couche épaisse (telles que requises dans la plupart des réacteurs industriels). Au-dessus de 5000 µm, l'efficacité de conversion diminue considérablement.

Le fait que des mousses avec une taille d'alvéoles si grande donnent des bons résultats est surprenant, à la fois par rapport aux monolithes en céramique poreuse, et par rapport aux mousses alvéolaires présentant des alvéoles de petite taille. En effet, compte tenu des facteurs hydrodynamiques, l'utilisation de mousses alvéolaires à grande taille d'alvéoles en catalyse ou en filtration, et surtout en photocatalyse, ne paraît *a priori* pas intéressante.

En effet, selon les constatations des inventeurs, les mousses alvéolaires présentent un intérêt en termes de performances si leurs quatre facteurs principaux sont modulés de manière adéquate. En particulier :
- La surface spécifique développée par les mousses alvéolaires est un facteur important. Dans le cadre de la présente invention, on préfère une surface spécifique BET d'au moins 2 m²/g, et préférentiellement d'au moins 5 m²/g.
- Le pouvoir de filtration ou d'impactage des mousses alvéolaires est surprenamment important. On parle de pouvoir de filtration pour des particules (donc des microorganismes: virus, bactéries, spores, etc...) et d'impactage pour des molécules chimiques. On peut en général définir quatre forces agissant sur ce pouvoir de filtration ou d'impactage : le mouvement brownien, les forces de gravité, les forces d'intersection, les forces d'impaction directe. Les inventeurs ont trouvé que ces forces ont un impact plus marqué pour des tailles de ponts (ds) plus petits. Les forces prépondérantes dépendent des cas : s'il s'agit de molécules chimiques ou de microorganismes, et même si il s'agit de virus (par exemple 40 nm de taille) ou des bactéries (par exemple 1 µm x 3 µm de taille).
- Le transfert de matière gaz-solide ou liquide-solide est élevé. Les inventeurs ont constatés que de manière surprenante, ce transfert de matière s'améliore pour des tailles d'alvéoles plus élevées.
- La transmission de la lumière dans les mousses doit être élevée pour des applications de photocatalyse.

Sachant que les différentes grandeurs caractéristiques sont liées entre-elles, le gain en performances lors de l'utilisation des mousses alvéolaires en photocatalyse résulte d'une optimisation entre ces différents paramètres. Cet optimum est représenté, dans le cas des carbures élaborés par le procédé décrit ci-dessus, principalement par des mousses alvéolaires dont la taille moyenne des alvéoles est comprise entre 3000 µm et 5000 µm. Une surface spécifique BET comprise entre 2 et 40 m²/g, et de préférence entre 5 et 25 m²/g, est particulièrement favorable.

Un autre avantage des mousses alvéolaires de carbure par rapport aux monolithes céramiques poreux est également que chacun des quatre paramètres (i.e. la taille des fenêtres (Phi), la taille des alvéoles (a), la taille des ponts (ds) et la porosité (epsillon)) est contrôlable (modulable), ce qui n'est pas le cas des monolithes.

Les mousses utilisées dans le cadre de l'invention doivent présenter une transmission optique dans le spectre visible et proche UV suffisante pour leur utilisation en tant que photocatalyseur ou support de photocatalyseur. On préfère que la transmission optique globale soit d'au moins 10% pour une épaisseur de 1,5 cm de mousse alvéolaire et pour une lumière d'une longueur onde comprise entre 400 et 700 nm.

D'une manière générale, pour son application comme support de catalyseur ou catalyseur dans le cadre de la présente invention, en dessous d'une densité de 0,05 g/cm³, on rencontre des problèmes de tenue mécanique de la mousse, alors qu'au-dessus de 0,5 g/cm³, le volume poreux alvéolaire va être réduit et la perte de charge va augmenter sans procurer un avantage fonctionnel. Avantageusement, la densité de la mousse alvéolaire utilisée dans le cadre de la présente invention est comprise entre 0,1 et 0,4 g/cm³.

L'invention peut être réalisée avec différents types de mousses alvéolaires.

### a) Mousses alvéolaires de carbure

On peut préparer des mousse alvéolaires de carbure selon des procédés connus, décrits pour fabriquer en particulier, la mousse alvéolaire de β-SiC, qui est connue en tant que telle. Une mousse alvéolaire en carbure peut être obtenue par exemple par le procédé Prin, qui comprend l'imprégnation d'une préforme en mousse polyuréthane alvéolaire avec une suspension d'une poudre de silicium (ou d'un autre métal ou métalloïde) dans une résine organique (voir EP 0 624 560 B1, EP 0 836 882 B1 ou EP 1 007 207 A1). La résine thermodurcissable peut être pure ou diluée dans un solvant approprié, tel que l'éthanol, l'acétone ou un autre solvant organique adéquat. Cela permet d'ajuster sa viscosité, ce qui favorise son mélange avec la poudre de silicium et son infiltration dans la mousse polymère. Comme résine thermodurcissable, on peut utiliser par exemple les résines phénoliques ou furfuryliques.

Comme mousse de polymère, on utilise avantageusement une mousse alvéolaire de polyuréthane. Cette mousse peut par exemple présenter une structure macroscopique ouverte dont le diamètre moyen est sélectionné entre environ 800 µm et 5000 µm. Dans le cadre de la présente invention, on vise une mousse de carbure présentant une taille moyenne d'alvéoles comprise entre 2500 µm et 5000 µm, et on utilise donc une mousse de polymère alvéolaire avec une taille moyenne d'alvéoles similaire (i.e. également comprise entre 2500 µm et 5000 µm).

Après infiltration, la mousse peut être mise à sécher à l'air ambiant. La température de polymérisation se situe typiquement entre 130°C et 200°C, et la température de carbonisation entre 500°C et 900°C. Une température d'environ 800°C est particulièrement avantageuse. On préfère effectuer ce traitement sous atmosphère inerte (argon par exemple). Ainsi, on obtient un squelette de carbone contenant des inclusions de silicium, qui forme le précurseur de SiC. La dernière étape est le traitement thermique au cours duquel est formé le SiC par réaction entre la mousse de carbone avec la poudre de silicium. Ce traitement est effectué typiquement à une température comprise entre 1200°C et 1500°C (qui convient particulièrement à la formation de β-SiC), de préférence sous un balayage d'un gaz inerte tel que l'argon. La réaction fait intervenir un oxyde gazeux comme vecteur du métal ou métalloïde, formé par réaction entre le métal ou métalloïde (par exemple Si) et les groupements oxygénés provenant de la résine. L'oxyde volatil (par exemple SiO) réagit ensuite avec le noir de carbone pour former le carbure (par exemple SiC) avec dégagement de CO.

Le CO formé est évacué par le flux de gaz inerte et permet de déplacer l'équilibre de la réaction vers la formation du carbure.

Selon un procédé avantageux, on imprègne une préforme en mousse de PU commerciale par un mélange de résine formo-phénolique, dans laquelle a été dispersé du silicium métallique pulvérulent, formant un mélange approximativement équimolaire. Après séchage à la température ambiante et polymérisation par étuvage à 150°C pendant 2 heures, on a effectué la carburation par traitement thermique à 1350°C pendant plusieurs heures sous argon, suivi d'un traitement sous air à 900°C pendant 2 heures.

La mousse de β-SiC, préparée selon le procédé Prin référencée ci-dessus ou par tout autre procédé, avec une surface spécifique comprise entre environ 2 m²/g et environ 40 m²/g, et de préférence entre 5 m²/g et 25 m²/g, constitue un support particulièrement préféré pour la réalisation du photocatalyseur selon la présente invention.

Une mousse particulièrement préférée est une mousse alvéolaire en β-SiC, qui présente une structure connexe continue dans les trois dimensions avec des ouvertures de pores variables, comprises entre 800 et 5000 µm, avantageusement entre 1000 et 4800 µm. La porosité (macroporosité) ouverte de cette mousse de SiC peut varier de 30 à 95%, notamment de 50 à 90%.

Ces propriétés morphologiques de la mousse alvéolaire couplée avec la bonne conductivité thermique du carbure de silicium permettent d'une part une forte dissipation de l'énergie (ce qui est connu en tant que tel de nombreuses publications, voir références [1], [2] et [3]) dans l'ensemble de la structure ainsi qu'une distribution homogène du fluide réactif sur l'ensemble du volume de la mousse (ce qui connu en tant que tel des références [2] et [3]).

Références bibliographiques pour cette section :
[1] M. Lacroix, P. Nguyen, D. Schweich, C. Pham Huu, S. Savin-Poncet, D. Edouard " Pressure drop measurements and modelling on SiC foams." Chemical Engineering Science, vol. 62: 3259-3267 (2007*).*
[2] Groppi, G. and E. Tronconi; "Design of novel monolith catalyst supports for gas/solid reactions with heat exchange." Chemical Engineering Science 55(12): 2161-2171 (2000*).*
[3] Giani, L., G. Groppi, et al.; "Mass-Transfer Characterization of Metallic Foams as Supports for Structured Catalysts". Ind. Eng. Chem. Res. 44: 4993-5002 (2005*).*

### b) Dépôt de nanofibres ou nanotubes

Ce dépôt est optionnel. Les nanotubes ou nanofibres peuvent être déposées sur la mousse alvéolaire de β-SiC, selon des techniques connues de l'homme du métier. Par exemple, on peut les déposer à l'aide de techniques décrites ci-dessous sous lettre c) (« première méthode »), qui convient également pour tous types de nanotubes et nanofibres.

On préfère cependant les synthétiser *in situ* sur le substrat, selon toute technique appropriée,

A titre d'exemple, la synthèse de nanofibres ou nanotubes de carbone peut être effectuée de la manière suivante :

### Etape (i) : Incorporation d'un catalyseur de croissance de nanotubes ou nanofibres dans le support poreux de β-SiC.

Ce catalyseur est destiné à catalyser la croissance des nanotubes ou nanofibres de carbone. Avantageusement, du nickel est utilisé, notamment pour fabriquer des nanofibres de carbone, ou du fer, du cobalt ou un mélange de fer et de cobalt pour fabriquer des nanotubes en carbone. Peut également être utilisé tout autre mélange binaire ou ternaire de ces trois éléments.

Nous décrivons ici un mode de réalisation typique pour cette étape. Le support poreux de β-SiC est imprégné avec une solution d'un précurseur de phase active. Une solution aqueuse ou alcoolique convient. Le précurseur peut être un sel d'un métal de transition, par exemple du Ni(NO₃)₂. La charge en métal est avantageusement comprise entre 0,4% massique et 5% massique, et de préférence entre 0,5% et 2%. Après l'imprégnation, on sèche à l'étuve, de préférence à une température comprise entre 80°C et 120°C pendant 1 à 10 heures, puis on calcine sous air ou sous atmosphère inerte à une température comprise entre 250°C et 500°C. Le précurseur de phase active est alors transformé en phase active, préférentiellement par une réduction sous gaz réducteur à une température appropriée, par exemple comprise entre 250°C et 500°C sous hydrogène. La durée de cette réduction se situe typiquement entre 0,2 heures et 3 heures.

### Etape (ii) : Croissance de nanotubes ou nanofibres de carbone à partir d'un mélange comprenant au moins un hydrocarbure et de l'hydrogène.

L'hydrocarbure est un hydrocarbure en C1 à C10 aliphatique, oléfinique, acétylénique ou aromatique. Les hydrocarbures aliphatiques, oléfiniques ou acétyléniques peuvent être linéaires ou branchés. On préfère les hydrocarbures aliphatiques ou oléfiniques en C1 à C4, et notamment ceux en C2 ou C3. L'acétylène convient également. Avec l'éthane, la température de synthèse est avantageusement choisie entre 680°C et 750°C. Ainsi on forme des nanofibres ou nanotubes de carbone d'un diamètre moyen d'environ 60 nm et d'une longueur de l'ordre d'un à plusieurs micromètres.

Parmi les hydrocarbures aromatiques qui peuvent être utilisés figure le toluène qui, mélangé à du ferrocène, conduit, selon les constatations des présents inventeurs, à la formation de nanotubes en carbone alignés sur un substrat de SiC. Une température de réaction avantageuse dans ce cas se situe entre 750°C et 850°C, et plus spécialement autour de 800°C. Les concentrations des nanotubes de carbone ainsi formés sont contrôlées par la durée de la synthèse et par la concentration du ferrocène dans la solution. Les nanotubes de carbone formés avec du ferrocène sont orientés perpendiculairement à la surface de la mousse ; leur diamètre moyen est de l'ordre de 80 nm, et leur longueur peut atteindre plusieurs dizaines de micromètres.

Ainsi on obtient des nanofibres ou nanotubes de carbone. Pour obtenir des nanofibres de SiC, une troisième étape est nécessaire :

### Etape (iii) : Transformation des nanotubes ou nanofibres en carbone en nanotubes et nanofibres de SiC.

Dans cette étape optionnelle, on fait réagir les nanotubes ou nanofibres de carbone avec une vapeur de SiO dans une enceinte de traitement thermique. La vapeur de SiO peut être produite dans l'enceinte de traitement thermique, au plus près des structures carbonées à convertir en SiC. Dans un mode de réalisation, la génération de SiO peut être assurée par chauffage d'un mélange de Si et de SiO₂ placé à proximité des nanotubes ou nanofibres en carbone.

Pour obtenir du β-SiC, la température de réaction se situe avantageusement entre 1000°C et 1500°C, préférentiellement entre 1050°C et 1400°C, et encore plus préférentiellement entre 1150°C et 1350°C.

En fonction de la durée de la réaction, une conversion partielle ou complète des nanotubes ou nanofibres de carbone en nanofibres de SiC, et notamment du β-SiC, peut être obtenue.

La synthèse de nanotubes de TiO₂ sur une mousse de SiC est décrite ci-dessous (lettre c), « sixième méthode »).

Le dépôt de nanotubes de titanates peut être fait de la même manière que le dépôt de nanotubes de TiO₂, décrit ci-dessous sous lettre c) (« première méthode »), qui convient également pour tous types de nanotubes et nanofibres. Les nanotubes de titanates sont préparés par traitement hydrothermique (avantageusement à une température comprise entre 110 et 145°C, typiquement à 130°C) d'une poudre de TiO₂ dans une base forte (typiquement NaOH) concentrée (typiquement 10 M) dans un autoclave. Ensuite, on lave, on sèche et on calcine à une température comprise entre 350°C et 450°C (typiquement 380°C). Selon un mode de réalisation, on ajoute 1 g de TiO₂ pulvérulent à 50 mL d'une solution de NaOH (10 M) dans un autoclave en Teflon ®. L'ensemble est agité pendant une heure puis laissé à 130°C pendant 48 heures. La poudre blanche obtenue est ensuite filtrée sous vide et lavée avec HCl (2 M) jusqu'à l'obtention de la neutralité, rincée à l'eau distillée, puis séchée toute la nuit à 110°C, et on calcine à 380°C.

On peut aussi imprégner la mousse de carbure de cette solution, mûrir, typiquement à 130°C, laver avec une solution de HCl, rincer à l'eau, sécher et calciner ; ainsi on synthétise les nanotubes de titanate directement sur la mousse.

### c) Dépôt du photocatalyseur

Le photocatalyseur peut être déposé directement sur la mousse alvéolaire ou sur les nanotubes ou nanofibres déposés comme décrit ci-dessus. La phase photocatalytiquement active doit comporter au moins un matériau semi-conducteur dans sa composition chimique.

Par matériau semi-conducteur, on entend, au sens de la présente invention, un matériau où les états électroniques ont un spectre de bande comprenant une bande de valence et une bande de conduction séparées par une bande interdite, et où l'énergie nécessaire pour faire passer un électron de ladite bande de valence à ladite bande de conduction est de préférence comprise entre 1,5 eV et 4 eV. A titre de tels matériaux semi-conducteurs, on peut notamment citer les chalcogénures, et plus particulièrement l'oxyde de titane, ou bien encore d'autres oxydes métalliques tels que WO₃, ZnO ou SnO₂, ou bien des sulfures métalliques tels que CdS, ZnS ou WS₂, ou des séléniures tel que CdSe, ou encore d'autres composés tels que GaAs ou GaP. Selon la présente invention, on utilise préférentiellement l'oxyde de titane TiO₂ qui conduit à des résultats particulièrement satisfaisants, et qui est peu onéreux.

Au sens de la présente description, le terme « matériau semi-conducteur photoactivé » désigne un matériau semi-conducteur du type précité qui a été soumis à un rayonnement comprenant des photons d'énergie supérieure ou égale à l'énergie nécessaire pour promouvoir les électrons de la bande de valence vers la bande de conduction (énergie dite gap entre les bandes de valence et de conduction).

Ainsi, au sens de la présente description, on entend en particulier par « oxyde de titane photoactivé » un oxyde de titane soumis à un rayonnement comprenant des photons d'énergie supérieure ou égale à l'énergie nécessaire pour promouvoir les électrons de la bande de valence vers la bande de conduction, typiquement un rayonnement contenant des photons d'énergie supérieure à 3 eV, de préférence à 3,2 eV, et en particulier un rayonnement comprenant des longueurs d'ondes inférieures ou égales à 400 nm, par exemple inférieures ou égales à 380 nm. On peut aussi utiliser la lumière visible, si elle permet d'activer le matériau semi-conducteur. Cela est le cas du TiO₂ sous la forme rutile, à titre d'exemple. En cas de besoin, par exemple pour le TiO₂ anatase, on peut greffer des éléments de transfert de charge sur le semi-conducteur ; il peut s'agir de chromophores et/ou de nanoparticules (« quantum dots »), d'un second matériau semi-conducteur absorbent dans le spectre visible et peuvent transférer la charge sur le premier semi-conducteur. A titre d'exemple, on peut utiliser des nanoparticules (d'une dimension typique comprise entre 2 et 10 nm) de CdS. Une autre possibilité pour utiliser du TiO₂ de forme anatase est de le modifier par dopage ; l'anatase conduit à un rendement quantique meilleur que la forme rutile.

A titre de rayonnements, on peut notamment citer les rayonnements fournis par les lampes à rayonnements ultraviolets du type des lampes dites à lumière noire, ou ceux fournis par des Diodes ElectroLuminescentes (DEL en français, LED en anglais).

Il est connu que, dans un matériau semi-conducteur photoactivé, et en particulier dans un oxyde de titane photoactivé, il se crée, sous l'effet d'un rayonnement de type précité, des paires électrons/trous (un trou étant un déficit électronique dans la couche de valence laissé lors du saut d'un électron vers la bande de conduction), ce qui confère au matériau semi-conducteur photoactivé des propriétés d'oxydo-réduction prononcées. Ces propriétés d'oxydo-réduction sont particulièrement prononcées dans le cas de l'oxyde de titane photoactivé, qui sont mises à profit dans de nombreuses applications photocatalytiques de l'oxyde de titane.

Le dépôt de particules photocatalytiques sur la mousse alvéolaire peut être un dépôt discontinu de particules photocatalytiques isolées, ou bien peut consister en un revêtement plus ou moins uniforme recouvrant une partie significative, voire la majorité ou même la totalité de la surface. Le dépôt de la phase photocatalytiquement active peut être effectué directement sur la mousse alvéolaire, ou sur un revêtement intermédiaire déposé sur cette mousse, par exemple des nanofibres ou nanotubes. Les particules photocatalytiques peuvent être composées d'un semi-conducteur unique, ou bien consister en un mélange de phases dont l'une au moins est photocatalytique. Avantageusement, les particules photocatalytiques sont du TiO₂ (dioxyde de titane) ; ces particules peuvent être dopées.

Selon l'invention, le dépôt de la phase photocatalytiquement active ou sa synthèse *in situ* (i.e. sur la mousse alvéolaire de carbure) peut être réalisé par tout procédé approprié. Dans ce qui suit, nous décrivons plusieurs techniques de dépôt ou de synthèse, en prenant comme exemple une phase active préférée, le TiO₂. Il est entendu que ces techniques et procédés peuvent être adaptés à d'autres phases photocatalytiquement actives, et notamment à d'autres oxydes et d'autres chalcogénures.

Selon une première méthode, on dépose des particules cristallisées, que l'on met en suspension dans un solvant approprié, puis on les répand sur le substrat constitué par la mousse, par exemple par trempage du substrat. Plus précisément, le dépôt peut être obtenu par imprégnation de la mousse d'une solution contenant des particules de la phase photocatalytiquement active sous forme cristallisée, par exemple un chalcogénure (tel que le TiO₂). Cette imprégnation est suivie d'un séchage pour éliminer le solvant utilisé lors de l'imprégnation. Cette technique permet aussi de déposer des nanofibres ou nanotubes sur le substrat.

Selon une deuxième méthode, la synthèse de TiO₂ peut être réalisée directement sur la mousse, en l'imprégnant par une solution contenant le précurseur de TiO₂, selon un mode de synthèse appelée synthèse sol-gel. Ce procédé peut être réalisé selon différentes manières. Dans un mode de réalisation avantageux, on dépose d'abord, à partir d'une solution colloïdale d'un gel amorphe, des particules essentiellement amorphes sur le substrat constitué par la mousse, puis on sèche et on chauffe à une température et pour une durées suffisantes (typiquement à une température comprise entre 80°C et 450°C, et préférentiellement comprise entre 150°C et 450°C) pour transformer ces particules amorphes en cristaux.
Dans un mode de réalisation avantageux de cette méthode, le précurseur de TiO₂ est un alcoxyde de titane, et préférentiellement de l'isopropoxyde de titane. Il s'en suivra alors une étape de séchage puis de calcination, typiquement à une température comprise entre 150°C et 450°C, pour cristalliser le matériau sous sa forme TiO₂. Cette technique de sol-gel est applicable à d'autres oxydes métalliques.

Selon une troisième méthode, la synthèse de TiO₂ peut également être réalisée directement sur mousse à partir d'une phase vapeur contenant un précurseur gazeux de TiO₂, en faisant passer un flux gazeux contenant ledit précurseur de TiO₂. Ce précurseur peut être par exemple un alcoxyde de titane ou un chlorure de titane. Ce procédé peut être assisté par plasma, ou peut se dérouler sans plasma. Il s'en suivra alors une étape de séchage puis de calcination pour cristalliser le matériau sous sa forme TiO₂. Cette technique est applicable à d'autres semi-conducteurs photocatalytiquement actifs.

Selon une quatrième technique (appelée «LBL », ce qui signifie Layer-By-Layer), on dépose des couches successives de polyélectrolytes. Cette technique est décrite de manière conceptuelle dans l'article « Fuzzy Nanoassemblies: Toward Layered Polymeric Multicomposites » par Gero Decher, paru dans la revue Science, vol. 277, p. 1232-1237 (1997)). Avantageusement, on dépose au moins huit couches.

Selon une cinquième technique, on dépose des particules de phase photocatalytiquement active (tel que le TiO₂) par la méthode de Langmuir-Blodgett, décrite en tant que telle dans l'article « Préparation and Organized Assembly of Nanoparticulate TiO2 - Stearate Alternating Langmuir-Blodgett Films » par Lin Song Li et al, paru dans Journal of Colloid and Interface Science, vol 192, p. 275-280 (1997), dans l'article « Préparation of a TiO2 Nanoparticulate Film Using a Two-Dimensional Sol-Gel Process » by I. Moriguchi et al, paru dans la revue Chem. Mater., (1997), p. 1050-1057, et dans l'article « Characterization of TiO2 Nanoparticles in Langmuir-Blodgett Films » par P.J.G. Coutinho, Journal of Fluorescence (2006), p. 387-392.

Selon une sixième technique, on forme des nanotubes ou nanofibres de TiO₂ ou de titanates sur une mousse alvéolaire de carbure, par exemple sur du β-SiC. Le diamètre typique de ces nanotubes ou nanofibres est compris entre 10 et 20 nm environ. La surface spécifique d'un tel produit peut atteindre 300 et même 500 m²/g. Cette surface spécifique est principalement due aux nanotubes ou nanofibres, et elle n'est donc pas liée à une porosité. Sur un photocatalyseur de TiO₂ présent sous cette forme de nanotubes ou nanofibres, on observe une recombinaison moins importante des charges photogénérées, et donc un meilleur rendement quantique des réactions photocatalysées. Par ailleurs, en raison de la surface spécifique plus importante, on peut disperser plus finement des phases supplémentaires sur ce photocatalyseur, si nécessaire. Un procédé approprié de synthèse de nanofibres ou nanotubes sur une mousse alvéolaire de carbure est décrit dans l'exemple 6 ci-dessous. Dans une variante de ce procédé, on a imprégné le matériau après synthèse ou dépôt des nanotubes ou nanofibres (voir l'exemple 6) avec une solution d'un sel métallique, par exemple un sel de tungstène, puis calciné comme décrit ci-dessus. On peut ainsi obtenir des photocatalyseurs couplés TiO₂ / SiC / oxyde métallique. Le WO₃ convient particulièrement.

La nature exacte de la phase active utilisée selon l'invention pour développer des propriétés photocatalytiques, dans la mesure où elle comporte au moins un matériau activé par le rayonnement lumineux, n'est, en règle générale, pas déterminante pour mettre en oeuvre une réaction ou un procédé photocatalytique.
Ainsi, dans le cas de l'oxyde de titane, par exemple, tout oxyde de titane développant des propriétés photocatalytiques et pouvant être ancré sous forme de particules ou de revêtement sur la mousse peut être utilisé efficacement dans le procédé de l'invention, ce qui constitue encore un avantage du procédé.
Néanmoins, selon un mode de réalisation, l'oxyde de titane utilisé selon le procédé de l'invention contient du TiO₂ de forme anatase, de préférence à raison d'au moins 50%. Ainsi, selon ce mode de réalisation, l'oxyde de titane utilisé peut par exemple être constitué pour l'essentiel (à savoir en général pour au moins 99% en masse, et de préférence pour au moins 99,5% en masse, voire pour au moins 99,9% en masse) de TiO₂ de forme anatase.
L'utilisation de TiO₂ sous forme rutile se révèle également intéressante, dans la mesure où le TiO₂ sous cette forme est photoactivé par le spectre de la lumière visible.
Selon un autre mode de réalisation avantageux, l'oxyde de titane utilisé comprend un mélange de TiO₂ de forme anatase et de TiO₂ de forme rutile, avec une proportion massique d'anatase/rutile de préférence entre 50/50 et 99/1, par exemple entre 70/30 et 90/10, et typiquement de l'ordre de 80/20.

Par ailleurs, notamment pour optimiser les échanges entre le matériau semi-conducteur de type oxyde de titane et le flux réactionnel, il est le plus souvent avantageux que le matériau semi-conducteur utilisé ait une surface spécifique comprise entre 2 et 500 m²/g, de préférence supérieure ou égale à 20m²/g, et encore plus avantageusement au moins égale à 50 m²/g et ce, tout particulièrement lorsqu'il s'agit d'oxyde de titane.

Le matériau semi-conducteur photoactivé qui est utilisé selon l'invention peut se présenter sous différentes formes physiques, en fonction du milieu traité, et notamment en fonction du volume de ce milieu et de la vitesse à laquelle on souhaite mettre en oeuvre le procédé. De façon générale, le matériau semi-conducteur de type oxyde de titane peut être utilisé sous toute forme adaptée à son irradiation par un rayonnement de longueur d'onde permettant sa photoactivation et permettant la mise en contact de l'oxyde de titane à l'état photoactivé avec les molécules du flux réactionnel, sous réserve qu'il soit accessible.

### d) Utilisation en photocatalyse

Plusieurs types de réacteurs photocatalytiques peuvent être utilisés avantageusement. On peut introduire une ou plusieurs pièces de mousse, par exemple de forme cylindrique, dans un élément d'enveloppe formant une paroi étanche aux liquides et aux gaz, ledit élément d'enveloppe étant transparent ou non, à travers lequel est conduit le milieu réactionnel. Ledit élément d'enveloppe peut être un élément tubulaire. Dans le cas d'un élément d'enveloppe transparent, la lumière peut provenir de l'extérieur (i.e. par une lampe extérieure), alors que dans le cas d'un élément d'enveloppe opaque, la lumière doit provenir de l'intérieur (par exemple par une lampe interne, ou par des diodes LED, ou par des dispositifs de type quantum dot), ou doit être apporté à l'intérieur par des fibres optiques. Plusieurs de tels éléments d'enveloppe, par exemple des éléments tubulaires, peuvent être mis en parallèle, éventuellement utilisant une source lumineuse commune (notamment dans le cas de tubes transparents). On peut également utiliser un réacteur à double voie, chaque voie étant constitue d'au moins un élément tubulaire, et le réacteur étant pourvu de deux électrovannes permettant de basculer le flux de milieu réactionnel sur l'un des deux éléments tubulaires, l'autre pouvant être régénéré ou échangé pendant que l'autre fonctionne.

Dans un autre mode de réalisation, on utilise un réacteur, typiquement tubulaire, de diamètre plus important, par exemple compris entre 10 et 100 cm, dans lequel on introduit plusieurs pièces de mousse, ainsi qu'une pluralité de sources lumineuses ; ces dernières sont introduits dans ces pièces de mousse, typiquement sous la forme de lampes de forme allongée (typiquement approximativement cylindrique) ou fibres optiques orientées parallèlement au sens long dudit élément tubulaire. Les pièces de mousse sont avantageusement de forme cylindrique ; elles peuvent avoir une forme d'anneaux.

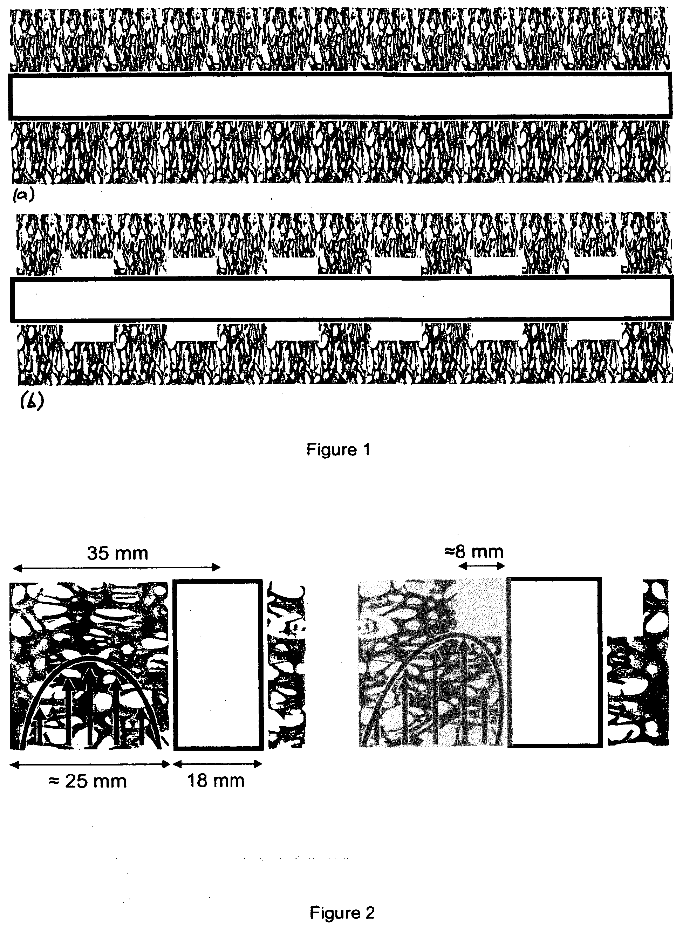

Selon l'invention, on introduit dans un élément tubulaire des anneaux de mousses présentant de manière alternée des diamètres intérieurs différents. La figure 1(a) montre de manière schématique cette géométrie pour une configuration comportant 13 anneaux cylindriques de mousse, alternativement de 7 cm de diamètre extérieur et de 2 cm d'épaisseur ; la figure 2 montre les cotes. Au centre des anneaux se trouve une source lumineuse longitudinale. La figure 1(b) montre à titre de comparaison un réacteur avec des anneaux cylindriques de mousses de diamètre identique. On a calculé le profil de vitesse dans les deux réacteurs pour un flux de gaz ou de liquide ; le résultat est donné sur la figure 2. On constate ainsi que le profil de vitesse des particules est asymétrique dans le cas où le diamètre intérieur des anneaux n'est pas le même (cas de la figure 1(b)). C'est grâce à cette asymétrie qu'une plus grande partie du flux passe dans les zones les plus éclairées : un tel réacteur présente un taux de conversion plus élevé qu'un réacteur dont le diamètre intérieur est constant. Un réacteur rempli de mousses en alternance peut être préféré au même réacteur rempli intégralement de mousse, sur l'ensemble de sa longueur.

Ceci permet d'augmenter globalement la quantité de lumière reçue en chaque point de la mousse, ce qui peut, dans le cas d'un choix judicieux de l'alternance des mousses, compenser la diminution de la quantité de mousses, et donc de la quantité de phase photocatalytiquement active à l'intérieur du réacteur.

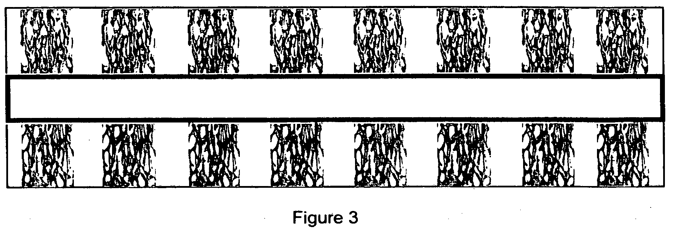

Dans un mode de réalisation illustré schématiquement sur la figure 3, l'espace laissé disponible par le retrait d'un certain nombre de mousses du réacteur est réparti sur l'ensemble du réacteur, de manière que les mousses soient équidistantes à l'intérieur du réacteur. L'équidistance n'est cependant pas une nécessité absolue.

Le photocatalyseur utilisé dans le cadre de l'invention convient pour les réactions en phase gazeuse ou liquide, pour les réactions de type oxydation (par exemple l'oxydation des alcools ou l'oxydation du CO en CO₂), réduction, reformage, décomposition (par exemple de composés organiques volatiles (COV) nuisibles), l'hydrogénation et/ou la déshydrogénation des hydrocarbures ou des composés organiques, la photodissociation de l'eau ou le reformage d'alcools tels que le méthanol. Il convient également pour des oxydations partielles de molécules organiques. Il convient également pour l'oxydation de molécules contenant des hétéroatomes tels que le soufre, le phosphore, l'azote. On cite ici parmi les molécules soufrées le diéthylsulfure, le diméthyl sulfure, le H₂S, le SO₂. On cite ici parmi les molécules phosphorées les molécules organophosporées, telles que les diméthylméthylphosphonates. On cite ici parmi les molécules azotées les méthylamines et l'acétonitrile. Il convient également pour les réactions permettant le traitement des oxydes d'azote NOₓ).

Le photocatalyseur utilisé dans le cadre de l'invention peut aussi être utilisé comme filtre pour filtrer des agents biologiques, tels que bactéries, virus ou tout autre composé assimilé dans une phase liquide ou gazeuse. Cette activité de filtration est avantageusement accompagnée d'une activité photocatalytique. Les mousses alvéolaires utilisées dans le cadre de l'invention ne retiennent que partiellement ces objets de petite taille, mais leur effet filtrant est suffisant pour conduire à une augmentation du temps de résidence telle que la réaction photocatalytique est plus efficace. Dans le cas des agents biologiques, l'activité photocatalytique conduit à la mort cellulaire : un tel filtre retient au moins partiellement les agents biologiques et relargue des agents biologiques inactivés.

A titre d'exemple, un tel réacteur peut être installé, de manière très simple, à entrée de conduits de climatisation ou d'aspiration d'air de bâtiments ou véhicules. Il peut aussi être utilisé pour purifier des effluents gazeux ou liquides.

### e) Utilisation pour la décontamination biologique

Le photocatalyseur utilisé dans le cadre de l'invention peut être utilisé pour l'inactivation ou dégradation d'agents biologiques. On connaît déjà des filtres de bactéries à base de mousse de PU (voir l'article « Potential of Silver Nanoparticle-Coated Polyurethane Foam As an Antibacterial Water Filter » par P. Jain et T. Pradeep, paru dans la revue « Biotechnology and Bioengineering, vol 90(1), avril 2005, p. 59 - 62). Mais il ne s'agit pas là d'un procédé catalytique, car la mousse est recouverte de nanoparticules d'argent, dont l'effet bactéricide est connu par ailleurs.

Selon l'invention, on utilise un procédé photocatalytique pour détruire les agents biologiques, qui peuvent aussi être des virus, des bactéries, des spores bactériens, des allergènes, des spores de champignons contenus dans des fluides, gazeux ou liquides. L'avantage de ce filtre photocatalytique est sa fable perte de charge, même pour des épaisseurs importantes (de l'ordre d'une dizaine de centimètres à une centaine de centimètres). Cela permet de traiter des fluides avec des débits (ou vitesses linéaires) importants, tous en assurant une activité filtrante et une activité photocatalytique dans le volume. En revanche, que la plupart des milieux photocatalytiques connus montrent des limitations sérieuses. A titre d'exemple, les milieux filtrants bi-dimensionnels, tels que les feutres, les papiers, les tissés, ne permettent pas une pénétration profonde de la matière retenue par le filtre dans le milieu filtrant, et ne peuvent être utilisés en présence de milieux agressifs.

La présence de nanotubes ou nanofibres, et plus généralement de nanostructures unidimensionnelles, améliore la capacité de filtration du photocatalyseur selon l'invention, sans augmenter de manière significative la perte de charge.

### f) Avantages de l'invention

L'utilisation de mousses tridimensionnelles alvéolaires comme support de photocatalyseur permet de palier un certain nombre de limitations rencontrés pour la plupart des substrats ou médias photocatalytiques existants, à savoir :
(i) une utilisation en flux traversant avec une perte de charge minime à débit (ou vitesse linéaire) élevé ;
(ii) une bonne transmission de la lumière, que l'on peut ajuster en jouant sur la taille des alvéoles ;
(iii) un contact intime avec le milieu réactionnel (flux de gaz ou liquide) à traiter, en raison d'une turbulence accrue au contact avec la mousse tridimensionnelle ;
(iv) l'utilisation d'un milieu tridimensionnel permet une distance de contact accrue avec le milieu réactionnel lorsque l'on travaille en flux traversant (par exemple approximativement perpendiculairement à la section de la mousse), alors que dans un réacteur tubulaire classique en mode lit traversant, et notamment dans des conditions d'un réacteur piston, la distance de contact, i.e. la distance sur laquelle il peut y avoir contact entre le flux et le revêtement catalytique du réacteur, correspond typiquement à la longueur du réacteur ;
v) le couplage des propriétés photocatalytiques de la mousse avec ses propriétés de filtration, ces dernières étant ajustables en fonction de la taille des alvéoles ;
(vi) d'une manière générale, une souplesse d'adaptation, de modulation et de disposition spatiale de ces mousses, pour les adapter aux différents environnements dans lesquels elles seront utilisées.

Le photocatalyseur utilisé dans le cadre de l'invention peut être produit sous la forme d'une cartouche régénérable.

### Exemples de réalisation

Ces exemples sont donnés à titre d'illustration pour permettre à l'homme du métier de réaliser l'invention. Ils représentent des modes de réalisation particuliers de l'invention ou des aspects partiels de ces modes de réalisation et ne limitent pas sa portée.

### Exemple 1 : Transmission optique de mousses utilisées pour la mise en oeuvre de l'invention

On a approvisionné une mousse en β-SiC (fournisseur : SICAT) avec une taille moyenne d'alvéoles de 4500 µm. On a déterminé la transmission optique de blocs de différentes épaisseurs avec une lumière émise par une diode d'une longueur d'onde de 455 nm. Pour faire ces mesures, on a utilisé un bloc sous forme d'un disque qui tournait autour d'un axe. La surface du détecteur, complètement éclairée, était de 1 cm². La valeur mesurée était une valeur moyenne prise sur différents orientations de la mousse. Les résultats sont résumés dans le tableau 1.

**Tableau 1**

| Mousse de β-SiC (taille des alvéoles : 4500 µm) | | | | | | |
|---|---|---|---|---|---|---|
| Epaisseur [cm] | 0 | 0,7 | 1,25 | 1,8 | 2,5 | 3 |
| Transmission [%] | 100 | 45 | 21 | 8 | 6 | 2 |

### Exemple 2 : Dépôt d'un photocatalyseur sur une mousse de β-SiC

On a utilisé préparé une mousse de β-SiC sous la forme d'anneaux à partir d'une mousse en polyuréthane (PU) commerciale avec une taille des alvéoles d'environ 4 800 µm. Ces mousses en PU ont été découpées sous la forme de cylindres d'un diamètre externe de 4,2 cm (après imprégnation par la résine phénolique, le diamètre du cylindre avait augmenté pour atteindre 5,0 cm) qui ont ensuite été perforés pour obtenir une mousse sous la forme d'anneaux (diamètre interne de 3,0 cm). Durant le traitement de pyrolyse, la mousse a subi un retrait, et l'anneau de mousse carbonée possède alors un diamètre externe de 4,0 cm et un diamètre interne de 2,0 cm.
Le photocatalyseur a été déposé sur les anneaux de β-SiC par la voie dite « aqueuse » : Les anneaux ont été trempés dans une suspension aqueuse du photocatalyseur (par exemple TiO₂), sous agitation magnétique.

Dans une variante du procédé, on a soumis la mousse de β-SiC a un traitement oxydant, par exemple à 900 - 1000°C pendant 2 à 5 heures sous air, pour créer une phase de type SiO₂ en surface des mousses de SiC ; ensuite, le photocatalyseur a été déposé comme décrit ci-dessus.

### Exemple 3 : Essais photocatalytiques

Dans un réacteur tubulaire (proche de celui décrit dans la publication « Photocatalytic oxydation of butyl acetate on vapor phase on TiO2, Pt/TiO2 and WO3/TiO2 catalysts » par V. Keller et al., Journal of Catalysis, vol. 215, p. 129-138 en 2003)), on a réalisé des essais catalytiques sur différentes mousses selon l'invention, selon deux modes différents, appelés ici « Réacteur structuré » (utilisant une mousse alvéolaire selon l'invention) et (à titre de comparaison) « Réacteur tubulaire classique » dans lequel le photocatalyseur est déposé directement sur la paroi interne du réacteur. Toutes les expériences sont réalisées en flux sec.

### Pour les deux modes :

L'enveloppe extérieure du photoréacteur était un tube en Pyrex de longueur 300 mm et de diamètre 42 mm, au centre duquel était située la source de lumière, à savoir une lampe de type lumière noire (blacklight), fournissant de la lumière UV-A de puissance 8W (fournisseur Philips).

Les tests ont été effectués de la manière suivante :
Le flux d'entrée a été stabilisé en débit et concentration de méthanol sur le by-pass. Puis le même flux a été basculé sur le photoréacteur, dans le noir (lumière UV-A éteinte). Après une période d'adsorption dans le noir (plus ou moins longue selon les conditions expérimentales), pendant laquelle du méthanol s'adsorbe sur le catalyseur, le flux est revenu à sa valeur initiale, et la lampe UV-A a alors été allumé. Les performances photocatalytiques ont alors été suivies par microchromatographie en phase gazeuse.
En raison des flux utilisés et du volume du photoréacteur (volume interne du tube en Pyrex auquel on soustrait le volume occupé par la lampe), la vitesse linéaire du flux gazeux était de 8 cm/s.
On a travaillé sous un flux d'air sec avec un débit de 4,32 L/min, en utilisation une concentration en méthanol de 1200 ppm (volumique). Pour ce faire, un flux d'air (débit 40 mL/min) a été passé dans un saturateur contenant du méthanol liquide (fournisseur Carlo Erba, pureté > 99,9%) à une température de 20°C. Le flux d'air s'est chargé en méthanol, puis a été dilué dans un flux d'air sec porteur (débit 4,28 L/min). Le flux total avait alors un débit de 4,32 L/min.

Les essais photocatalytiques en mode « réacteur structuré » selon l'invention ont été effectués pour l'oxydation du méthanol en CO₂ en absence d'eau dans le flux réactionnel (flux sec).

Les essais comparatifs avec un « réacteur tubulaire (annulaire) classique » ont été effectués de la manière suivante :
La quantité désirée de TiO₂ pulvérulent a été mise en suspension dans une solution éthanol / eau (50/50 en volume) et a été passée aux ultrasons pendant 4 h à température ambiante (entre 1g et 4g dans 40 mL de solution). La suspension a alors été dispersée sur la surface interne du réacteur tubulaire en une étape, avec un séchage simultané à l'aide d'un sèche-cheveux. Un séchage final a été effectué sous air à l'étuve à 100°C pendant 12 h.

Les résultats suivants ont été obtenus avec un photocatalyseur déposé sur mousse alvéolaire de β-SiC selon l'invention :

Avec le réacteur tubulaire classique :

| | | | | | |
|---|---|---|---|---|---|
| Masse [g] | 0,5 | 1 | 2 | 3 | 4 |
| Conversion du méthanol [%] | 12 | 16 | 23 | 24 | 25 |

Avec le réacteur structuré :

| | | | |
|---|---|---|---|
| Masse [g] | 0,8 | 3,5 | 7 |
| Conversion du méthanol [%] | 26 | 40 | 52 |

### Exemple 4 : Dépôt de photocatalyseur « couche par couche »

Sur des mousses alvéolaires de β-SiC (taille des alvéoles environ 4800 µm, masse des pièces environ 3 g), on a déposée des couches successives de TiO₂ de la manière suivante :
On a trempé le substrat (mousse) dans une solution de PEI (Polyethylèneimine) pendant 20 min (concentration de PEI de 8,24 g/L). On a ensuite trempé le substrat dans 40 mL d'une solution TiO₂ P25 (eau : éthanol à 50:50 volumiques, à raison de 10 g de P25/L, pH = 8) pendant 20 min. Cette étape était suivie de deux étapes de trempage (lavage) pendant 10 minutes dans l'eau distillée (40 mL). Chaque étape s'est déroulée sous agitation orbitalaire.

Plusieurs couches ont été ainsi déposées. Ces mousses montraient des performances catalytiques similaires à celles essayées dans l'exemple 3.

### Exemple 5 : Dépôt de photocatalyseur par phase vapeur

On a déposé à partir d'une phase gazeuse (méthode CVD) un précurseur de titane sur des mousses de type différent. D'abord, on a fait passer un flux d'air chargé d'éthanol pendant 1 h à un vide de 60 mbar. Puis, on a fait passer un flux d'air chargé en vapeur de TTIP pendant 3h à un vide de 60 mbar. Et enfin, on a de nouveau fait passer un flux d'air chargé en vapeur d'eau pendant 4h à un vide de 60 mbar.

### Exemple 6 : Synthèse de nanotubes de ou nanofibres de TiO₂ ou titanates

Une quantité de 0,5 g d'une poudre de TiO₂ commerciale a d'abord été dispersée dans 90 mL soude concentrée (10 M) dans un autoclave en Teflon (volume 100 mL) pendant 4 heures ; la suspension obtenue a été soumis aux ultrasons pendant 20 minutes. Une pièce de mousse alvéolaire de SiC (0,8 g, taille moyenne des alvéoles 4800 µm) a été ajoutée à la suspension et chauffée à 130°C pendant 72 heures. La mousse a ensuite été dispersée dans 200 mL d'eau distillée pendant 2 heures, puis imprégnée dans une solution de HCl (1 M) pendant 2 heures avant d'être abondamment rincée à l'eau distillée, puis séchée à 110°C pendant 1 heure. On a ensuite effectué une calcination sous air à 380°C pendant 2 heures (avec une montée en température à raison de 2°C/minute).

Dans une variante de ce procédé, on a imprégné le matériau séché à 110°C avec une solution de paratungstate d'ammonium, puis calciné comme décrit ci-dessus. On a ainsi obtenu un photocatalyseur couplé WO₃ / TiO₂ / SiC.

### Exemple 7 : Essais photocatalytiques

Les résultats suivants ont été obtenus (a) avec un photocatalyseur déposé sur mousse alvéolaire de β-SiC selon l'invention (« réacteur structuré ») et (b) abec un photocatalyseur déposé directement sur la paroi interne du réacteur :

### a) avec le réacteur structuré :

La longueur de la mousse de SiC utilisée pour la réaction était de 20 mm. La masse de TiO₂ employée a été optimisée ; c'est la quantité optimale de TiO₂ utilisable dans ce réacteur structuré sur 20 mm de longueur de mousse de SiC.

| Débit d'air sec | Vitesse | Temps de séjour | Concentration volumique de méthanol | Masse [g] | Conversion du méthanol [%] |
|---|---|---|---|---|---|
| 0,36 L/min | 0.7 cm/s | 2.93 s | 1200 ppm | 0,3 g | 100% |
| 1 L/min | 1.9 cm/s | 1.06 s | 1200 ppm | 0,3 g | 100% |
| 4 L/min | 7.6 cm/s | 0.26 s | 1200 ppm | 0,3 g | 40% |
| 4 L/min | 7.6 cm/s | 0.26 s | 250 ppm | 0,3 g | 100% |
| 6 L/min | 11,4 cm/s | 0.18 s | 120 ppm | 0,3 g | 47% |

### b) avec le réacteur tubulaire classique :

La longueur du revêtement en TiO₂ utilisé pour la réaction était de 20 mm.

La masse de TiO₂ employée a été optimisée ; c'est la quantité optimale de TiO₂ utilisable dans ce réacteur tubulaire sur 20 mm de longueur.

| Débit d'air sec | Vitesse | Temps de séjour | Concentration volumique de méthanol | Masse [g] | Conversion du méthanol [%] |
|---|---|---|---|---|---|
| 0,36 L/min | 0.7 cm/s | 2.93 s | 1200 ppm | 0,0025 g | 46% |
| 1 L/min | 1.9 cm/s | 1.06 s | 1200 ppm | 0.0025 g | 6% |
| 4 L/min | 7.6 cm/s | 0.26 s | 1200 ppm | 0.0025 g | < 1% |
| 4 L/min | 7.6 cm/s | 0.26 s | 250 ppm | 0,0025 g | 5% |
| 6 L/min | 11,4 cm/s | 0.18 s | 120 ppm | 0,0025 g | 3% |

Cet exemple montre notamment que le bénéfice d'utiliser les mousses s'accroît par rapport au réacteur tubulaire classique lorsque le débit augmente (ce qui correspond aussi à une augmentation de la vitesse en m/s).

### Exemple 8 : Essais photocatalytiques

Les résultats suivants ont été obtenus (a) avec un photocatalyseur déposé sur mousse alvéolaire de β-SiC selon l'invention (« réacteur structuré ») et (b) abec un photocatalyseur déposé directement sur la paroi interne du réacteur :

### a) avec le réacteur structuré :

La longueur de la mousse de SiC utilisée pour la réaction était de 220 mm.

La masse de TiO₂ employée a été optimisée ; c'est la quantité optimale de TiO₂ utilisable dans ce réacteur structuré sur 220 mm de longueur de mousse de SiC.

| Débit d'air sec | Vitesse | Temps de séjour | Concentration volumique de méthanol | Masse [g] | Conversion du méthanol [%] |
|---|---|---|---|---|---|
| 4,3 L/min | 8.1 cm/s | 2.7 s | 1200 ppm | 2,97 g | 100% |
| 6 L/min | 11.3 cm/s | 1.9 s | 1200 ppm | 2,97 g | 80% |
| 6 L/min | 11.3 cm/s | 1.9 s | 5000 ppm | 2,97 g | 73% |
| 6 L/min | 11.3 cm/s | 1.9 s | 13000 ppm | 2,97 g | 45% |
| 8,5 L/min | 16.1 cm/s | 1.4 s | 1200 ppm | 2,97 g | 20% |

### b) avec le réacteur tubulaire classique :

La longueur du revêtement en TiO₂ utilisé pour la réaction a été de 220 mm.

La masse de TiO₂ employée a été optimisée.

| Débit d'air sec | Vitesse | Temps de séjour | Concentration volumique de méthanol | Masse [g] | Conversion du méthanol [%] |
|---|---|---|---|---|---|
| 4,3 L/min | 8.1 cm/s | 2.7 s | 1200 ppm | 0,026 g | 46% |
| 6 L/min | 11.3 cm/s | 1.9 s | 1200 ppm | 0,026 g | < 1% |
| 6 L/min | 11.3 cm/s | 1.9 s | 5000 ppm | 0,026 g | < 1% |
| 6 L/min | 11.3 cm/s | 1.9 s | 13000 ppm | 0,026 g | < 1% |
| 8,5 L/min | 16.1 cm/s | 1.4 s | 1200 ppm | 0,026 g | < 1% |

Cet exemple montre notamment que le bénéfice d'utiliser les mousses s'accroît par rapport au réacteur tubulaire classique lorsque le débit augmente (ce qui correspond aussi à une augmentation de la vitesse en m/s).

### Exemple 9: Etude de l'influence de la taille des alvéoles sur les performances Photocatalytiques

Les résultats suivants ont été obtenus avec un photocatalyseur déposé sur mousse alvéolaire de β-SiC selon l'invention, avec les paramètres suivants :
Débit d'air sec = 0,4 L/min ; Vitesse = 0.8 cm/s ; Temps de séjour = 29 s ;
Longueur du réacteur = 22 cm ; Concentration volumique en méthanol : 1200 ppm. TiO₂ : P25 de Degussa (Evonik).

Les résultats suivants ont été obtenus avec une quantité de TiO₂ optimisée sur les mousses alvéolaires de p-SiC :

| | | | |
|---|---|---|---|
| Essai 1 | Taille moyenne des alvéoles : 4400 microns | Masse de TiO₂ [g] | 2.97 |
| | | Longueur [cm] de mousses | 22 |
| | | Conversion du méthanol [%] | 100 |
| Essai 2 | Taille moyenne des alvéoles : 2700 microns | Masse de TiO₂ [g] | 3.5 |
| | | Longueur [cm] de mousses | 22 |
| | | Conversion du méthanol [%] | 36 |
| | | | |
| Essai 3 | Taille moyenne des alvéoles : 4900 microns | Masse de TiO₂ [g] | 2.98 |
| | | Longueur [cm] de mousses | 22 |
| | | Conversion du méthanol [%] | 76 |

Cet exemple montre la supériorité de la mousse alvéolaire de l'essai 1 sur celle des essais 2 et 3. Cette différence est uniquement due à la taille moyenne des alvéoles.

### Exemple 10 : Géométries spécifiques

Afin d'améliorer l'illumination et favoriser le passage du flux à dans les zones les plus éclairées, un réacteur tubulaire a été réalisée selon une configuration basée sur l'alternance de mousses de différents diamètres intérieurs. On a assemblé une configuration comportant 13 anneaux cylindriques de mousse de forme et dimensions identiques, de 7 cm de diamètre extérieur et de 2 cm d'épaisseur la figure 1(a) montre de manière schématique cette géométrie qui ne represente pas l'invention 1, la figure 2(a) montre les cotes. Au centre des anneaux se trouve une source lumineuse longitudinale. On a également réalisé un réacteur selon l'invention avec des anneaux cylindriques de mousses de diamètre intérieur alternativement différent (voir la figure 1(b) pour le principe et la figure 2(b) pour les cotes). Un tel réacteur présente un taux de conversion plus élevé qu'un réacteur dont le diamètre intérieur est constant. On a calculé le profil de vitesse dans les deux réacteurs pour un flux de gaz ou de liquide ; le résultat est donné sur les figures 2(a) et (b). On constate que le profil de vitesse des particules est asymétrique dans le cas où le diamètre intérieur des anneaux n'est pas le même (cas de la figure 1(b)). C'est grâce à cette asymétrie qu'une plus grande partie du flux passe dans les zones les plus éclairées :
Cette configuration (fig. 1(b)) peut être préférée à une géométrie où le réacteur serait intégralement garni de mousse (fig. 1(a)) puisqu'elle permet de favoriser le passage du flux vers les zones plus éclairées, c'est-à-dire vers la lampe (Fig. 2).

### Exemple 11 : Géométries spécifiques (non conforme à l'invention)

On a préparé un réacteur tubulaire rempli d'anneaux de mousses en alternance dans lequel on a aménagé un espace entre tous ou certains anneaux contigus, en retirant au moins un anneau. L'espace laissé disponible par le retrait d'un certain nombre de mousses du réacteur peut être réparti sur l'ensemble du réacteur, de manière que les mousses soient équidistantes à l'intérieur du réacteur, mais l'équidistance n'est cependant pas une nécessité absolue.

La figure 3 montre un exemple pour de une telle réalisation, avec 8 anneaux équidistants (a).

On a comparé la performance d'un réacteur comportant un photocatalyseur déposé sur mousse alvéolaire de SiC selon l'invention avec et sans espace interannulaire, pour l'oxydation photocatalytique du méthane en phase gazeuse. La masse de TiO₂ sur chaque mousse de SiC était optimisée. La concentration volumique de Méthanol en entrée était de 5000 ppm. Le débit d'air sec était de 6 Umin.

| Nombre anneaux | Vitesse [cm/s] | Temps de séjour dans la mousse [s] | Temps de séjour dans le réacteur [s] | Longueur de mousse utilisée [cm] | Distance entre anneaux [cm] | Masse de TiO₂ [g] | Conversion du méthanol [%] |
|---|---|---|---|---|---|---|---|
| 6 | 11.3 | 1.9 | 1.9 | 12 | 2 | 1.6 | 15.3 |
| 6 | 11.3 | 1.9 | 1.0 | 12 | 0 | 1.6 | 10,0 |

Cet exemple montre l'intérêt d'une configuration alternée.

## Revendications

1. Photoréacteur comportant
- au moins un photocatalyseur comportant une mousse alvéolaire de β-SiC et une phase photocatalytiquement active, déposée directement sur ladite mousse alvéolaire ou sur une phase intermédiaire déposée sur ladite mousse alvéolaire, la taille moyenne des alvéoles étant comprise entre 3000 µm et 5000 µm,
- un élément d'enveloppe étanche aux liquides et aux gaz,
- au moins une pièce dudit photocatalyseur étant située à l'intérieur dudit élément d'enveloppe, ladite au moins une pièce de photocatalyseur ayant une forme annulaire, et
- au moins une source d'un rayonnement lumineux,
**caractérisé en ce que**
(a) ledit photoréacteur comprend une pluralité de N pièces annulaires d'un photocatalyseur
(b) ledit rayonnement lumineux est introduit dans le diamètre intérieur desdites pièces annulaires,
(c) lesdites pièces annulaires présentent un diamètre intérieur alternativement différent, de manière à ce que toutes les pièces de numéro d'ordre pair présentent le même diamètre intérieur d₁, et toutes les pièces de numéro d'ordre impair présentent le même diamètre intérieur d₂.

2. Photoréacteur selon la revendication 1, **caractérisé en ce que** lesdites pièces annulaires sont séparées d'un espace vide ou d'une pièce optiquement transparente à au moins une partie dudit rayonnement lumineux utilisé.

3. Photoéacteur selon la revendication 1 ou 2, **caractérisé en ce que** ladite mousse alvéolaire de β-SiC présente une surface spécifique BET d'au moins 5 m²/g et une densité comprise entre 0,1 g/cm³ et 0,4 g/cm³.

4. Photoréacteur selon l'une quelconque des revendications 1 à 3, **caractérisé en ce que** ladite phase photocatalytiquement active est sélectionné dans le groupe constitué par :
- Les oxydes métalliques tels que WO₃, ZnO, TiO₂ et SnO₂, éventuellement dopés ou sur lesquels ont été greffés des éléments de transfert de charge,
- les titanates, éventuellement dopés,
- les sulfures ou séléniures métalliques, éventuellement dopés, tels que CdS, CdSe, ZnS, ZnSe et WS₂,
- les semiconducteurs de type III-V, éventuellement dopés, tels que GaAs et GaP.

5. Utilisation d'un photoréacteur selon l'une quelconque des revendications 1 à 4 pour catalyser des réactions chimiques en phase liquide.

6. Utilisation d'un photoréacteur selon l'une des revendications 1 à 4 pour l'inactivation ou dégradation d'agents biologiques.

## Patentansprüche

1. Photoreaktor, der Folgendes umfasst:
- mindestens einen Photokatalysator, der einen β-SiC-Zellschaum und eine photokatalytisch aktive Phase umfasst, die direkt auf dem besagten Zellschaum oder auf einer Zwischenphase abgelagert ist, die auf dem besagten Zellschaum abgelagert ist, wobei die durchschnittliche Größe von Zellen zwischen 3000 µm und 5000 µm liegt,
- ein Umhüllungselement, das für Flüssigkeiten und Gas dicht ist,
- wobei mindestens ein Teil des besagten Photokatalysators sich im Inneren des besagten Umhüllungselements befindet, wobei das besagte mindestens eine Photokatalysatorteil eine Ringform hat, und
- mindestens eine Quelle einer Lichtstrahlung,
**dadurch gekennzeichnet, dass**
(a) der besagte Photoreaktor eine Vielzahl von N ringförmigen Teilen eines Photokatalysators umfasst,
(b) die besagte Lichtstrahlung in den Innendurchmesser der besagten ringförmigen Teile eingeführt wird,
(c) die besagten ringförmigen Teile einen abwechselnd unterschiedlichen Innendurchmesser aufweisen, so dass alle Teile mit einer geraden laufenden Nummer denselben Innendurchmesser d₁ aufweisen und alle Teile mit einer ungeraden laufenden Nummer denselben Durchmesser d₂ aufweisen.

2. Photoreaktor nach Anspruch 1, **dadurch gekennzeichnet, dass** die besagten ringförmigen Teile durch einen Leerraum oder ein Teil, das für mindestens einen Teil der verwendeten besagten Lichtstrahlung optisch transparent ist, getrennt sind.

3. Photoreaktor nach Anspruch 1 oder 2, **dadurch gekennzeichnet, dass** der besagte β-SiC-Zellschaum eine spezifische BET-Oberfläche von mindestens 5 m²/g und eine Dichte zwischen 0,1 g/cm³ und 0,4 g/cm³ aufweist.

4. Photoreaktor nach einem der Ansprüche 1 bis 3, **dadurch gekennzeichnet, dass** die besagte photokatalytisch aktive Phase aus der Gruppe ausgewählt ist, die aus Folgendem besteht:
- Metalloxiden, wie WO₃, ZnO, TiO₂ und SnO₂, die gegebenenfalls dotiert sind oder auf die Ladungstransferelemente gepfropft wurden,
- Titanaten, die gegebenenfalls dotiert sind,
- Metallsulfiden oder -seleniden, die gegebenenfalls dotiert sind, wie CdS, CdSe, ZnS, ZnSe und WS₂,
- Halbleitern vom Typ III-V, die gegebenenfalls dotiert sind, wie GaAs und GaP.

5. Verwendung eines Photoreaktors nach einem der Ansprüche 1 bis 4 zum Katalysieren von chemischen Reaktionen in flüssiger Phase.

6. Verwendung eines Photoreaktors nach einem der Ansprüche 1 bis 4 zum Deaktivieren oder Abbauen von biologischen Agenzien.

## Claims

1. Photoreactor comprising
- at least one photocatalyst comprising a β-SiC alveolar foam and a photocatalytically active phase, deposited directly on said alveolar foam or on an intermediate phase deposited on said alveolar foam, the mean cell size being between 3000 µm and 5000 µm,
- a shell element that is tight to liquids and gases,
- at least one piece of said photocatalyst being situated inside said shell element, said at least one piece of photocatalyst having an annular shape, and
- at least one luminous radiation source,
**characterised in that**
(a) said photoreactor comprises a plurality of N annular pieces of a photocatalyst,
(b) said luminous radiation is introduced into the internal diameter of said annular pieces,
(c) said annular pieces have an alternatively different internal diameter, such that all the pieces having an even sequential number have the same internal diameter d₁, and all the pieces having an odd sequential number have the same internal diameter d₂.

2. Photoreactor according to claim 1, **characterised in that** said annular pieces are separated from an empty space or an optically transparent piece to at least at portion of said luminous radiation used.

3. Photoreactor according to claim 1 or 2, **characterised in that** said β-SiC alveolar foam has a BET specific surface area of at least 5 m²/g and a density between 0.1 g/cm³ and 0.4 g/cm³.

4. Photoreactor according to any of claims 1 to 3, **characterised in that** said photocatalytically active phase is selected in the group consisting of:
- Metal oxides such as WO₃, ZnO, TiO₂ and SnO₂, optionally doped or whereon load transfer elements have been grafted,
- titanates, optionally doped,
- metal sulphides or selenides, optionally doped, such as CdS, CdSe, ZnS, ZnSe and WS₂,
- type III-V semiconductors, optionally doped, such as GaAs and GaP.

5. Use of a photoreactor according to any one of claims 1 to 4 for catalysing liquid-phase chemical reactions.

6. Use of a photoreactor according to any one of claims 1 to 4 for the inactivation or degradation of biological agents.
